# EUROPÄISCHE PATENTSCHRIFT

(11) **EP 1 127 648 B1**
(45) Veröffentlichungstag und Bekanntmachung des Hinweises auf die Patenterteilung: **23.03.2005**
(21) Anmeldenummer: 00124965.5
(22) Anmeldetag: 16.11.2000
(51) Int. Cl.: B23K 1/19, B23K 35/30, B23P 6/04, F01D 5/00

(54) **Verfahren zur Reparatur einer Gasturbinenkomponente**
Repairing method of gas turbine components
Procédé de réparation de composants de turbine à gaz

(30) Priorität: 23.02.2000 DE 10008257
(43) Veröffentlichungstag der Anmeldung: 29.08.2001
(73) Patentinhaber: ALSTOM Technology Ltd, 5400 Baden (CH)
(72) Erfinder: Bögli, Andreas, 5430 Wettingen (CH); Fried, Reinhard, 5415 Nussbaumen (CH)

(56) Entgegenhaltungen:
- US-A- 4 381 944
- US-A- 4 493 451
- US-A- 5 666 643

## Beschreibung

### TECHNISCHES GEBIET

Bei der Erfindung handelt es sich um ein Lötverfahren zur Reparatur einer sowohl durch hohe thermische wie durch mechanische Beanspruchungen beschädigten Komponente einer Gasturbine.

### STAND DER TECHNIK

Turbinenschaufeln von Gasturbinen sind hohen thermischen wie mechanischen Belastungen während des Betriebes ausgesetzt. Diese Belastungen führen durch die unterschiedlichen externen Beanspruchungen zu verschiedenen Materialschädigungen. Auf der einen Seite führen hohe Temperaturschwankungen und Fliehkräfte zu Spannungen, welche die Ursache für Risse sind. Zudem können durch Oxidation, Korrosion, Erosion oder Abrasion grossflächigere Materialschäden wie Vertiefungen, Löcher oder andere nachteilige Arten der Abtragung auftreten. Um die Lebensdauer der beschädigten Teile zu verlängern und einen kostenintensiven Austausch gegen Neuteile zu vermeiden sind aus dem Stand der Technik zahlreiche Reparaturverfahren bekannt, mit dem Ziel die Materialschädigungen zu beseitigen und nicht zuletzt auch die ursprüngliche Form der Turbinenschaufel wiederherzustellen.

Die Amerikanische Patentschrift US 4,726,101 offenbart ein Verfahren zur Reparatur einer Turbinenschaufel. Dabei wird ein aus einem Lötpulver und einem Binder bestehendes Tape auf die Turbinenkomponente aufgebracht und erhitzt. Das Grundmaterial und das Tape verbinden sich so durch Diffusion bei der anschliessenden Wärmebehandlung. Dem Lötpulver, welches im Prinzip eine ähnliche Zusammensetzung wie das Grundmaterial hat, ist zur Erniedrigung des Schmelzpunktes noch 1-5% Bor beigefügt. Auch eine Anwendung mit mehreren, übereinander liegenden Lagen des Tapes ist möglich. Wenig vorteilhaft ist bei diesem Verfahren allerdings, dass das Tape 30-40% Kunststoffbinder (organischen Binder) enthält, der beim anschliessenden Lötprozess ausdampfen muss und Poren oder Rückstände hinterlassen kann (Kohlenstoff, Asche), welche die Festigkeit und die Qualität mindern. Zudem bewirkt die thermische Behandlung ein Schrumpfen des Tapes.

Daneben sind verschiedene Sinterverfahren, welche mit Lötpulvern arbeiten, bekannt. Ein solches Verfahren offenbart beispielsweise die Druckschrift US 5,156,321. Das Lötpulver wird auf die Oberfläche des Grundmaterials aufgetragen und danach soweit erhitzt, dass die Schmelztemperatur des Lötpulvers überschritten wird, es somit schmilzt, das Grundmaterial hingegen fest bleibt. Das flüssige Lötmaterial sintert zusammen und diffundiert in einen oberflächennahen Bereich des Grundmaterials durch eine Kapillarwirkung in dem Riss. Dadurch entsteht eine relativ dichte Lotschicht. Andere Verfahren zur Reparatur von Rissen mittels zwei Legierungen, welche in Pulverform vorliegen, sind auch aus der Druckschrift US 4,381,944 bekannt. Wenig vorteilhaft bei Verbindungen, welche mit Lötpulver hergestellt werden, ist allerdings, dass sie nicht in ausreichendem Masse temperaturbeständig sind, d.h. dass sich bei einer Erhöhung der Temperatur die Belastungsfähigkeit der Lötverbindung verschlechtert.

Ein Verfahren, welches wahlweise mit einem Tape oder vorgesintertem Lötpulver arbeitet, ist auch aus der Schrift US 5,666,643 bekannt. Dem Lötmaterial werden zur zusätzlichen Stabilität Partikel beigefügt, welche einen hohen Schmelzpunkt haben. Vorgesinterte Lötpulver schrumpfen zwar nicht mehr, haben aber den Nachteil, dass sie kalt unflexibel sind, d.h. dass sie nur noch schwer einer vorgegebenen Kontur anzupassen sind.

Legierungen, welche prinzipiell für Lötverfahren geeignet sind, sind im Stand der Technik zahlreich bekannt. Als Beispiel sei hier das Patent US 3,155,491 genannt, welches eine Lötlegierung offenbart.

### DARSTELLUNG DER ERFINDUNG

Die Erfindung löst die Aufgabe, ein Lötverfahren zur Reparatur von beschädigten Turbinenschaufeln zu schaffen, welches auf einfache Weise mit einem Lot und einem Füllmaterial anwendbar ist, und die im Stand der Technik vorhandenen Nachteile vermeidet.

Erfindungsgemäss wird dies bei einem Verfahren gemäss dem Oberbegriff des Anspruchs 1 dadurch erreicht, dass es aus folgenden Schritten besteht (a) der Aufbringung eines Metallschaums auf den Riss bzw. die Materialschädigung, (b) der Einbringung von Lötpulver in die Poren des Metallschaums und (c) der Wärmebehandlung des Lötprozesses.

Vorteilhaft ist der Metallschaum verformbar und kann auf diese Weise einfach der Kontur des Grundmaterials angepasst werden. In einer vorteilhaften Ausführungsform besitzt der offenporige Metallschaum eine Porosität von 60-95%. Damit kann eine ausreichende Kapillarwirkung des Metallschaums sichergestellt werden.

In einer vorteilhaften Ausführungsform wird zusätzlich zum Lötpulver noch ein Füllmaterial beigefügt und in die Poren des Metallschaums eingebracht. In einer anderen vorteilhaften Ausführungsform ist die Zusammensetzung so ausgewählt, dass insbesondere das Füllmaterial, aber auch der Metallschaum der Zusammensetzung des Grundmaterials der zu reparierenden Komponente metallurgisch nahe ist.

Es kann vorteilhaft sein, auf die Oberfläche des Metallschaums nach dem Einfüllen des Lötpulvers geringfügige Mengen von Bindemittel aufzutragen. Dies verhindert insbesondere das versehentliche Herausfallen von Lötpulver bei unvorsichtigem Umgang. Das aufgetragene Bindemittel kann einfach verdampfen, da es lediglich auf die Oberfläche aufgetragen ist, und somit nicht aus den Poren des Metallschaums heraus diffundieren muss.

Das erfindungsgemässe Verfahren kann auch vorteilhaft zum besonderen Schutz von Bereichen, welche extremer Oxidation ausgesetzt sind, dienen, indem die chemische Zusammensetzung des Metallschaumes angepasst wird.

### KURZE BESCHREIBUNG DER ZEICHNUNG

Es zeigen
- **Fig.1**: ein erfindungsgemässes Ausführungsbeispiel von zu reparierenden Rissen an einer Komponente mit einem Metallschaum und einem Lötpulver und
- **Fig. 2**: ein weiteres erfindungsgemässes Ausführungsbeispiel einer zu reparierenden Vertiefung und Rissen an einer Komponente mit einem Metallschaum und einem Lötpulver.

### WEG ZUR AUSFÜHRUNG DER ERFINDUNG

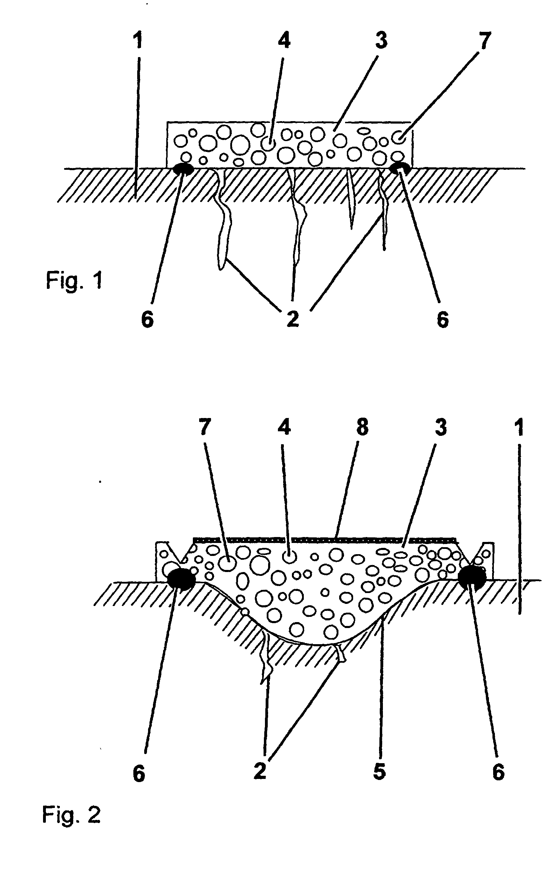

Die Figur 1 zeigt einen Schnitt durch die Oberfläche eines Grundmaterials 1, welches durch externe Belastungen mehrere Risse 2 aufweist. Die Erfindung als solche bezieht sich allgemein auf ein Verfahren zur Reparatur solcher Risse 2 oder anderen Materialschädigungen, z.B. von einer durch Erosion entstandenen Vertiefung 5, welche in der Figur 2 dargestellt wird, an der Oberfläche von thermisch und mechanisch hoch beanspruchten Komponenten, so zum Beispiel an Turbinenschaufeln oder Brennkammerteilen von Gasturbinen. Das erfindungsgemässe Lötverfahren verwendet zur Reparatur einen Metallschaum 3 und ein Lötpulver 4. Es ist auch denkbar, einen Riss 2 vor dem erfindungsgemässen Verfahren auszuschleifen.

Zuerst wird auf die auszubessernde Stelle, also auf den Riss 2, der Metallschaum 3 aufgebracht. Dies kann durch einfaches Aufpunkten an diskreten Befestigungspunkten 6 geschehen. Der Metallschau 3 ist sehr leicht formbar und kann durch Zerschneiden einfach auf die richtige Grösse gebracht werden. Ein Zerschneiden kann mit einfachen Hilfsmittel geschehen. Eine exakte Anpassung an die Form der Materialschädigung kann durch die grosse plastische Verformbarkeit des Metallschaums 3 sogar ohne weitere Werkzeuge lediglich mit der Hand geschehen. Bei dieser Vorbereitung sollte darauf geachtet werden, dass der Metallschaum 3 bei der nachfolgenden Wärmebehandlung zusammenschmilzt und dadurch sein ursprüngliches Volumen reduziert. Bei der Reparatur der Vertiefung 5 in der Figur 2 ist der Metallschaum 3 so auf die Oberfläche aufgebracht, dass er selber eine glatte Oberfläche bildet. Das führt dazu, dass die Randbereiche stärker als der mittlere Bereich verdichtet sind.

Verfahren zur Herstellung von Metallschäumen 3, insbesondere von Nickelschaum, und die Eigenschaften dieser verschiedenen Metallschäume 3 selbst sind beispielsweise aus den Schriften WO 00/00673, aus US 5,584,983 oder aus US 4,957,543 bekannt. Metallschäume 3 auf der Basis von Nickel oder Nickel-Chrom sind auch von der Firma SEAC International BV, P.O. Box 142 2920 AC Krimpen a/d Ijssel, The Netherlands, erhältlich. Diese werden unter dem Markennamen "RECEMAT® International" vertrieben.

Als Metallschaum 3 kann beispielsweise ein Nickelschaum eingesetzt werden, insbesondere wenn es sich um Turbinenschaufeln handelt, die aus einer Nickelbasis-Superlegierung bestehen. Selbstverständlich ist für den Metallschaum 3 auch eine Legierung auf der Basis eines anderen Materials möglich.

Als zweiter Verfahrensschritt wird ein Lötpulver 4 in Poren 7 des Metallschaums 3 eingebracht. Als Lötpulver 4 kann ein aus dem Stand der Technik bekanntes Material verwendet werden. Diese Lötpulver 4 sind zahlreich und allgemein aus dem Stand der Technik bekannt. Üblicherweise ist dem Lötpulver 4 zur Senkung des Schmelzpunktes geringe Mengen von Bor oder Silicium beigefügt. Solche Legierung ist beispielsweise auch aus der Schrift US 3,155,491 bekannt.

Es ist auch denkbar, zusammen mit dem Lötpulver 4 ein zusätzliches Füllmaterial mit in die Poren 7 des Metallschaums 3 einzubringen. Ein solches Füllmaterial sollte in vorteilhafter Weise aus dem selben Material wie die zu reparierende Komponente bestehen. Damit kann sichergestellt werden, dass die Materialeigenschaften einer reparierten Materialschädigung in verbesserter Weise den Eigenschaften des Grundmaterials 1 entspricht.

Da der Metallschaum 3 eine gewisse Porosität und eine offenzellige Struktur aufweist, kann das Lötpulver 4 durch leichtes Schütteln oder Klopfen in die feinen Poren des Metallschaums 3 gelangen. Für die Zwecke der Erfindung sollte die Porosität bei 60 - 95 % liegen. Um eine optimale Diffusion des Lotes zu gewährleisten sollte die Wandstärke der einzelnen Fasern nicht grösser als 300 µm sein. Dies ist die minimale Diffusionsdistanz des reinen Lotes während einer normalen Wärmebehandlung. Das erfindungsgemässe Verfahren kann auch vorteilhaft zum besonderen Schutz von Bereichen, welche extremer Oxidation ausgesetzt sind, dienen, indem eine geeignete Zusammensetzung des Metallschaums verwendet wird. Eine Modifikation des Schaumes kann auf verschiedene Arten geschehen: Mittels CVD-Beschichtung des Schaumes, Fertigung des Schaumes aus entsprechender Legierung oder Ionen-Implantation. Im Falle von derartigen Schäumen kann auch ein makroskopisch gradienter Werkstoff erzeugt werden, in dem der nach aussen liegende Teil (der Teil, der weg von der Oberfläche des zu reparierenden Teils weist) eine geringere Porosität aufweist, also verdichteter ist als der Teil, welcher zur Oberfläche des Grundmaterials 1 weist. Dies führt zu einer Konzentration von bestimmten Elementen in dem nach aussen weisenden Teil. Denkbar ist eine Anreicherung an Y, um eine höhere Oxidationsbeständigkeit zu erhalten. Im Falle erhöhter Abrasionsfestigkeit können entsprechende Hartphasen im Schaum wünschenswert sein.

Durch die anschliessende Wärmebehandlung des Lötprozesses, im welchem eine Temperatur oberhalb der Schmelztemperatur des Lötpulvers 4 angewandt wird, schmilzt es und bildet zusammen mit dem Metallschaum 3 ein homogenes Gefüge. Je nachdem, ob ein zusätzliches Füllmaterial mit in die Poren des Metallschaums 3 mit eingebracht wird, kann die Schmelztemperatur der homogenen Mischung variieren. Als Faustregel gilt dabei, dass die Temperatur umso höher ist, je höher der Anteil an dem Füllmaterial ist.

Wie es in der Figur 2 dargestellt ist, kann es zur weiteren Unterstützung des Lötprozesses vorteilhaft sein, geringe Mengen von einem Bindemittel 8 auf die Oberfläche des Metallschaums 3 und des Lötpulvers 4 aufzubringen. Das Bindemittel 8 verhindert das versehentliche Herausfallen von Lötpulver. Während der thermischen Wärmebehandlung des Lötprozesses kann es leicht verdampfen, da es lediglich auf die Oberfläche des Metallschaums 3 aufgebracht worden ist.

Durch das erfindungsgemässe Verfahren wird eine Lötverbindung hergestellt, die vorteilhaft verbesserte mechanische Eigenschaften aufweist. Die Lötverbindung kann auch bei erhöhter Temperatur ohne Einbusse bei der Festigkeit eingesetzt werden.

### BEZUGSZEICHENLISTE

- 1: Grundmaterial
- 2: Riss
- 3: Metallschaum
- 4: Lötpulver
- 5: Vertiefung
- 6: Befestigungspunkt
- 7: Poren
- 8: Bindemittel

## Patentansprüche

1. Lötverfahren zum Ausbessern von Rissen (2) und Materialschädigungen (5) an der Oberfläche von thermisch und mechanisch hoch beanspruchten Komponenten, welche aus einem Grundmaterial (1) bestehen,
**dadurch gekennzeichnet, dass**
es aus folgenden Schritten besteht
(a) der Aufbringung eines offenzelligen Metallschaums (3) auf den Riss (2) bzw. die Materialschädigung (5),
(b) der Einbringung von Lötpulver (4) in die Poren (7) des Metallschaums (3) und
(c) der Wärmebehandlung des Lötprozesses.

2. Lötverfahren nach Anspruch 1,
**dadurch gekennzeichnet, dass**
zusätzlich zum Lötpulver (4) ein weiteres Füllmaterial, welches eine metallurgisch ähnliche Zusammensetzung wie das Grundmaterial (1) aufweist, in die Poren (7) des Metallschaums (2) eingebracht wird.

3. Lötverfahren nach Anspruch 1 oder 2,
**dadurch gekennzeichnet, dass**
nach der Einbringung des Lötpulvers (4) bzw. des Füllmaterials zusätzlich noch ein Bindemittel (8) auf die Oberfläche des Metallschaums (3) aufgebracht wird.

4. Lötverfahren nach einem der Ansprüche 1 bis 3,
**dadurch gekennzeichnet, dass**
der Metallschaum (3) mechanisch an diskreten Punkten an der Oberfläche des Grundmaterials (1) befestigt wird.

5. Lötverfahren nach einem der Ansprüche 1 bis 3,
**dadurch gekennzeichnet, dass**
ein Riss (2) vor dem Lötverfahren ausgeschliffen wird.

6. Lötverfahren nach einem der vorangehenden Ansprüche,
**dadurch gekennzeichnet, dass**
es sich bei der Komponente um eine Turbinenschaufel aus einer Nickel- oder Kobalt-Basis-Superlegierung handelt.

7. Lötverfahren nach einem der Ansprüche 1 bis 6,
**dadurch gekennzeichnet, dass**
ein Metallschaum (3) mit einer Porosität von 60 - 95% aufgebracht wird.

8. Lötverfahren nach einem der Ansprüche 1 bis 6,
**dadurch gekennzeichnet, dass**
ein Metallschaum (3) mit einer variablen Porosität aufgebracht wird.

9. Lötverfahren nach einem der Ansprüche 1 bis 6,
**dadurch gekennzeichnet, dass**
ein Metallschaum (3) mit einer variablen Porosität aufgebracht wird, wobei die Porosität derart variiert ist, das sie zur Oberfläche des Grundmaterials (1) hin vergrössert bzw. von der Oberfläche des Grundmaterials (1) verkleinert ist.

10. Lötverfahren nach einem der Ansprüche 1 bis 6,
**dadurch gekennzeichnet, dass**
ein Metallschaum (3) mit Fasern mit einer maximalen Wandstärke von 300 µm aufgebracht wird.

11. Lötverfahren nach einem der Ansprüche 1 bis 6,
**dadurch gekennzeichnet, dass**
ein Metallschaum (3) mit einer ähnlichen metallurgischen Zusammensetzung wie das Grundmaterial (1) der Komponente aufgebracht wird.

12. Lötverfahren nach Anspruch 11,
**dadurch gekennzeichnet, dass**
ein Yttrium-haltiger Metallschaum (3) aufgebracht wird.

13. Lötverfahren nach einem der Ansprüche 1 bis 6,
**dadurch gekennzeichnet, dass**
es sich bei dem Metallschaum (3) um einen reinen Nickel- oder Kobaltschaum handelt.

## Claims

1. Soldering process for repairing cracks (2) and material damage (5) at the surface of components which are subject to high thermal and mechanical loads and consist of a base material (1), **characterized in that** it comprises the following steps
(a) the application of an open-cell metal foam (3) to the crack (2) or the material damage (5),
(b) the introduction of soldering powder (4) into the cells (7) of the metal foam (3), and
(c) the heat treatment of the soldering process.

2. Soldering process according to Claim 1, **characterized in that** in addition to the soldering powder (4) a further filling material, which has a metallurgically similar composition to the base material (1), is introduced into the cells (7) of the metal foam (2).

3. Soldering process according to Claim 1 or 2, **characterized in that** after the soldering powder (4) and/or the filling material has been introduced, a binder material (8) is additionally also applied to the surface of the metal foam (3).

4. Soldering process according to one of Claims 1 to 3, **characterized in that** the metal foam (3) is mechanically secured to the surface of the base material (1) at discrete points.

5. Soldering process according to one of Claims 1 to 3, **characterized in that** a crack (2) is ground down prior to the soldering process.

6. Soldering process according to one of the preceding claims, **characterized in that** the component is a turbine blade or vane consisting of a nickel- or cobalt-base superalloy.

7. Soldering process according to one of Claims 1 to 6, **characterized in that** a metal foam (3) with a porosity of 60 - 95% is applied.

8. Soldering process according to one of Claims 1 to 6, **characterized in that** a metal foam (3) with a variable porosity is applied.

9. Soldering process according to one of Claims 1 to 6, **characterized in that** a metal foam (3) with a variable porosity is applied, the porosity being varied in such a manner that it is increased towards the surface of the base material (1) or reduced away from the surface of the base material (1).

10. Soldering process according to one of Claims 1 to 6, **characterized in that** a metal foam (3) comprising fibres with a maximum wall thickness of 300 µm is applied.

11. Soldering process according to one of Claims 1 to 6, **characterized in that** a metal foam (3) with a similar metallurgical composition to the base material (1) of the component is applied.

12. Soldering process according to Claim 11, **characterized in that** an yttrium-containing metal foam (3) is applied.

13. Soldering process according to one of Claims 1 to 6, **characterized in that** the metal foam (3) is a pure nickel or cobalt foam.

## Revendications

1. Procédé de brasage pour la réparation de fissures (2) et d'endommagements de matériau (5) sur la surface de composants fortement sollicités thermiquement et mécaniquement, qui se composent d'un matériau de base (1),
**caractérisé en ce qu'**il comprend les étapes suivantes :
(a) application d'une mousse métallique à alvéoles ouvertes (3) sur la fissure (2) ou l'endommagement de matériau (5),
(b) introduction de poudre de brasage (4) dans les pores (7) de la mousse métallique (3) et
(c) traitement thermique du processus de brasage.

2. Procédé de brasage selon la revendication 1,
**caractérisé en ce que**
l'on introduit en plus de la poudre de brasage (4), un matériau de remplissage supplémentaire qui présente une composition similaire du point de vue métallurgique à celle du matériau de base (1), dans les pores (7) de la mousse métallique (2).

3. Procédé de brasage selon la revendication 1 ou 2,
**caractérisé en ce que**
l'on applique en outre sur la surface de la mousse métallique (3) encore un liant (8) après l'introduction de la poudre de brasage (4) ou du matériau de remplissage.

4. Procédé de brasage selon l'une quelconque des revendications 1 à 3,
**caractérisé en ce que**
la mousse métallique (3) est fixée mécaniquement en des points discrets sur la surface du matériau de base (1).

5. Procédé de brasage selon l'une quelconque des revendications 1 à 3,
**caractérisé en ce que**
l'on alèse à la meule une fissure (2) avant le procédé de brasage.

6. Procédé de brasage selon l'une quelconque des revendications précédentes,
**caractérisé en ce que**
le composant est une aube de turbine constituée d'un superalliage à base de nickel ou de cobalt.

7. Procédé de brasage selon l'une quelconque des revendications 1 à 6,
**caractérisé en ce que**
l'on applique une mousse métallique (3) ayant une porosité de 60 à 95%.

8. Procédé de brasage selon l'une quelconque des revendications 1 à 6,
**caractérisé en ce que**
l'on applique une mousse métallique (3) ayant une porosité variable.

9. Procédé de brasage selon l'une quelconque des revendications 1 à 6,
**caractérisé en ce que**
l'on applique une mousse métallique (3) ayant une porosité variable, la porosité étant variée de telle sorte qu'elle soit accrue vers la surface du matériau de base (1) ou diminuée depuis la surface du matériau de base (1).

10. Procédé de brasage selon l'une quelconque des revendications 1 à 6,
**caractérisé en ce que**
l'on applique une mousse métallique (3) ayant des fibres avec une épaisseur de paroi maximale de 300 µm.

11. Procédé de brasage selon l'une quelconque des revendications 1 à 6,
**caractérisé en ce que**
l'on applique une mousse métallique (3) ayant une composition métallurgique similaire à celle du matériau de base (1) du composant.

12. Procédé de brasage selon la revendication 11,
**caractérisé en ce que**
l'on applique une mousse métallique (3) contenant de l'yttrium.

13. Procédé de brasage selon l'une quelconque des revendications 1 à 6,
**caractérisé en ce que**
la mousse métallique (3) est une mousse de nickel ou de cobalt pure.
